# EUROPÄISCHE PATENTSCHRIFT

(11) **EP 2 388 619 B1**
(45) Veröffentlichungstag und Bekanntmachung des Hinweises auf die Patenterteilung: **25.03.2015**
(21) Anmeldenummer: 11003847.8
(22) Anmeldetag: 11.05.2011
(51) Int. Cl.: G01S 17/10, G01S 7/497, G01S 7/481, G01S 17/42

(54) **Optischer Sensor**
Optical sensor
Capteur optique

(30) Priorität: 20.05.2010 DE 102010022159
(43) Veröffentlichungstag der Anmeldung: 23.11.2011
(60) Teilanmeldung: 15150942.9
(73) Patentinhaber: Leuze electronic GmbH + Co. KG, 73277 Owen/Teck (DE)
(72) Erfinder: Lohmann, Lutz Dr., 82140 Olching (DE); Passinger, Dr. Sven, 30982 Pattensen (DE)
(74) Vertreter: Ruckh, Rainer Gerhard

(56) Entgegenhaltungen:
- EP-A2- 2 236 069
- AT-A4- 507 684
- DE-A1- 10 230 397
- DE-A1-102004 055 851
- DE-A1-102008 032 216
- US-A1- 2009 268 206

## Beschreibung

Die Erfindung betrifft einen optischen Sensor.

Derartige optische Sensoren dienen generell zur Erfassung von Objekten in einem Überwachungsbereich. Insbesondere werden diese optische Sensoren im Bereich der Sicherheitstechnik eingesetzt, wo der mit dem optischen Sensor überwachte Überwachungsbereich einen Gefahrenbereich einer Anlage, die von einer Maschine, einem Arbeitsgerät wie einem Roboter oder dergleichen gebildet sein kann, bildet.

Optische Sensoren, die zu derartigen Überwachungsaufgaben eingesetzt werden, können insbesondere als Flächendistanzsensoren ausgebildet sein. Ein derartiger Flächendistanzsensor ist beispielsweise aus der DE 103 26 848 A1 bekannt.

Der dort beschriebene Sensor dient zur Erfassung von Objekten in einem Überwachungsbereich und weist einen Sendelichtstrahlen emittierenden Sender, einen Empfangslichtstrahlen empfangenden Empfänger mit einer diesem zugeordneten Empfangsoptik mit einem vorgegebenen von den Empfangslichtstrahlen beaufschlagten Sichtfeld und eine Ablenkeinheit zur periodischen Ablenkung der Sendelichtstrahlen innerhalb eines vorgegebenen, den Überwachungsbereich definierenden Winkelbereich auf. In einer Auswerteeinheit wird in Abhängigkeit der Empfangssignale am Ausgang des Empfängers ein Objektfeststellungssignal generiert. Im Sichtfeld der Empfangsoptik ist eine Nahbereichsoptik angeordnet, wobei mittels der Justiereinheit der von der Nahbereichsoptik umfasste Teil des Sichtfelds der Empfangsoptik einstellbar ist.

Der Aufbau derartiger optischer Sensoren ist generell derart, dass der Sender und der Empfänger ortsfest, dass heißt stationär angeordnet sind. Um die Sendelichtstrahlen innerhalb eines flächigen Überwachungsbereichs zu führen, bildet allein die Ablenkeinheit ein drehbares und damit bewegliches Teil der in einem Gehäuse integrierten optischen Sensoren. Die Ablenkeinheit besteht dabei typisch aus wenigstens einem motorisch getriebenen Spiegel, an welchem die Sendelichtstrahlen und vorzugsweise auch die Empfangslichtstrahlen abgelenkt werden.

Nachteilig bei derartigen Flächendistanzsensoren ist, dass die Ablenkeinheit einen großen Platzbedarf beansprucht, so dass der Flächendistanzsensor insgesamt eine unerwünscht große Bauform hat.

Weiterhin ist nachteilig, dass der Weg der Sendelichtstrahlen vom Sender über die Ablenkeinheit zu einem Fenster im Gehäuse, über welches die Sendelichtstrahlen aus dem optischen Sensor geführt sind, sehr lang ist. Dasselbe gilt für die über das Fenster in das Gehäuse geführten und über die Ablenkeinheit zum Empfänger abgelenkten Empfangslichtstrahlen. Dies führt zu internen Reflexionen der Sendelichtstrahlen und der Empfangslichtstrahlen innerhalb des Gehäuses, wodurch die Nachweisempfindlichkeit des optischen Sensors reduziert wird.

Weiterhin ist nachteilig, dass die Ablenkeinheit, an welcher die Sendelichtstrahlen und Empfangslichtstrahlen abgelenkt werden, üblicherweise verkippt zu den Strahlachsen der Sendelichtstrahlen und Empfangslichtstrahlen ist, so dass die Strahlquerschnitte der Sendelichtstrahlen und der Empfangslichtstrahlen bei der Reflexion von der Ablenkeinheit verformt werden. Auch diese Strahlquerschnittsveränderung bewirkt eine Reduzierung der Nachweisempfindlichkeit des optischen Sensors.

Die DE 10 2004 055 851 A1 betrifft einen optischen Sensor zur Erfassung von Objekten in einem Überwachungsbereich mit einem Sendelichtstrahlen emittierenden Sender und einem Empfangslichtstrahlen empfangenden Empfänger, wobei die Sendelichtstrahlen und die Empfangslichtstrahlen über eine Ablenkeinheit geführt sind und ein Austrittsfenster in einer Frontwand eines Gehäuses durchsetzen. Weiterhin weist der optische Sensor eine Auswerteeinheit auf, in welcher in Abhängigkeit der Empfangssignale am Ausgang des Empfängers ein Objektfeststellungssignal generiert wird. Die Ablenkeinheit weist einen drehbaren Umlenkspiegel auf, dessen Spiegelfläche eine vorgegebene Krümmung zur Kompensation von Verzerrungen des Strahlquerschnitts der Empfangslichtstrahlen, welche durch den Durchtritt der Empfangslichtstrahlen durch das Austrittsfenster bedingt sind, aufweist.

Die DE 10 2008 032 216 A1 betrifft eine Vorrichtung zur Erkennung der Anwesenheit eines Objekts im Raum nach dem Pulslaufzeitverfahren mit einem Impulslaser, der gesteuert Lichtimpulse in den Raum sendet, einer Fotoempfangsanordnung, welche die von dem im Raum befindlichen Objekt zurückgeworfenen Lichtimpulse empfängt, einer Auswerteschaltung, welche aus der Zeit zwischen Aussendung und Empfang eines Lichtimpulses ein für den Abstand des Objekts vom Pulslaser charakteristisches Abstandssignal ermittelt, und einer ersten Lichtablenkvorrichtung, welche an die Auswerteschaltung ein für ihre momentane Winkelstellung repräsentatives erstes Winkelpositionssignal abgibt, wobei die erste Lichtablenkvorrichtung um eine erste Drehachse dreh- oder schwenkbar angeordnet ist und zur Aussendung aufeinanderfolgender Lichtimpulse unter sich verändernden Winkeln in einer ersten Ebene ausgebildet ist. Eine zweite Lichtablenkvorrichtung ist zwischen der ersten Lichtablenkvorrichtung und einer Energieversorgung der ersten Lichtablenkvorrichtung angeordnet, welche an die Auswerteschaltung ein für ihre momentane Winkelstellung repräsentatives zweites Winkelpositionssignal abgibt und welche einen Ablenkteller aufweist, der um eine zweite Drehachse dreh- oder schwenkbar angeordnet ist und der zur Änderung der Winkelposition der ersten Ebene ausgebildet ist.

Die DE 102 30 397 A1 betrifft eine Laserabtastvorrichtung, insbesondere zur Abstandsermittlung, mit einer Sendeeinheit, die einen Impulslaser zum Aussenden eines Lichtstrahls in einen zu überwachenden Bereich aufweist, mit einer Lichtablenkeinheit, um den von dem Impulslaser ausgesandten Lichtstrahl in den zu überwachenden Bereich zu lenken, mit einer Empfangseinheit zum Empfangen von Lichtimpulsen, die von einem im zu überwachenden Bereich befindlichen Gegenstand reflektiert werden, und mit einer für den Lichtstrahl durchlässigen Frontscheibe, welche die Sende-, Empfangs- und Lichtablenkeinheit von der Umgebung der Laserabtastvorrichtung trennt, wobei zumindest ein einen Teilstrahl von dem ausgesandten Lichtstrahl abzweigendes und den Teilstrahl für eine Messung der Transmission der Frontscheibe zu einem Photodetektor lenkendes optisches Element vorgesehen ist.

Die einen nachveröffentlichten Stand der Technik bildende EP 2 236 069 A2 betrifft ein selbsttätig verfahrbares Gerät, insbesondere selbsttätig verfahrbares Bodenstaub-Aufsammelgerät, mit elektromotorisch angetriebenen Verfahrrädern, einem Gerätegehäuse und vorzugsweise einem Staubsammelbehälter, wobei das Gerät mit einer Hinderniserkennung versehen ist, die aus optischen Sende- und Empfängereinheiten besteht und wobei Elemente zur Strahlumlenkung vorgesehen sind, wobei weiter zur Rundumerfassung zumindest ein Teil der Sende- und Empfängereinheiten um 180° oder mehr drehbar angeordnet ist. Um ein selbsttätig verfahrbares Gerät der in Rede stehenden Art hinsichtlich der Hinderniserkennung weiter verbessert auszugestalten, wird vorgeschlagen, dass die Sende-und Empfängereinheiten auf einem der optischen Messverfahren Phasenkorrelation, Lichtlaufzeitmessung oder Heterodynverfahren beruhen.

Der Erfindung liegt die Aufgabe zugrunde, einen optischen Sensor der eingangs genannten Art bereitzustellen, welcher bei möglichst einfachem Aufbau eine erhöhte Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der optische Sensor dient zur Erfassung von Objekten innerhalb eines Überwachungsbereichs und umfasst eine innerhalb eines Gehäuses angeordnete, um eine Drehachse drehbare Sende-/ Empfangseinheit. Die Sende- /Empfangseinheit umfasst einen emittierenden Sender und einen Empfangslichtstrahlen empfangenden Empfänger. Durch die Drehbewegung der Sende- / Empfangseinheit werden die Sendelichtstrahlen periodisch innerhalb des Überwachungsbereichs geführt. Die Sendelichtstrahlen und die Empfangslichtstrahlen sind durch ein Fenster des Gehäuses geführt, wobei das Fenster ein optisches Mittel zur Strahlformung der Sendelichtstrahlen und Empfangslichtstrahlen bildet. Eine Auswerteeinheit ist vorgesehen, in welcher ein Schaltsignal generiert wird, welches über einen Schaltausgang ausgegeben wird.

Ein wesentlicher Vorteil des erfindungsgemäßen optischen Sensors besteht darin, dass die rotierende Sende- /Empfangseinheit mit ihrem Sender und Empfänger dicht an das Fenster des Gehäuses herangeführt sein kann. Der Lichtweg der Sendelichtstrahlen und Empfangslichtstrahlen zwischen Sende- /Empfangseinheit und Fenster, der nicht durch einen Tubus oder dergleichen geschützt ist, kann daher sehr klein dimensioniert werden, so dass nahezu keine Verluste durch interne Reflexionen des Sendelichtstrahls und Empfangslichtstrahls innerhalb des Gehäuses auftreten. Weiterhin ist vorteilhaft, dass auf eine separate Ablenkeinheit verzichtet werden kann. Dadurch kann einerseits die Baugröße des optischen Sensors erheblich verringert werden. Zudem werden unerwünschte Deformationen der Strahlquerschnitte des Sendelichtstrahls und Empfangslichtstrahls, die bei der Reflexion an einer Ablenkeinheit entstehen würden, vermieden.

Schließlich wird auch eine unerwünschte Abschattung des Empfängers durch Komponenten des Senders, wie sie bei einem System mit Ablenkeinheit erhalten wird, vermieden.

Ein weiterer wesentlicher Vorteil besteht darin, dass das Fenster des Gehäuses, das ein separates Teil bilden kann oder einstückig mit dem Gehäuse ausgebildet sein kann, selbst optische Eigenschaften aufweist. Prinzipiell können für den Durchtritt der Sende- /Empfangslichtstrahlen auch separate Fenster vorgesehen sein. Dadurch können einerseits separate strahlformende Optikelemente für die Strahlformung der Sendelichtstrahlen und/oder Empfangslichtstrahlen vereinfacht ausgeführt oder sogar eingespart werden. Anderseits kann der Lichtweg der Sendelichtstrahlen und oder der Empfangslichtstrahlen innerhalb des Gehäuses so optimiert werden, dass dort Stahllichtverluste oder direkte Rückstreuungen der Sendelichtstrahlen in den Empfänger vermieden werden. Durch die optische Wirkung des Fensters des Gehäuses kann dann zudem die Strahlführung der Sendelichtstrahlen und Empfangslichtstrahlen außerhalb des Gehäuses hinsichtlich einer möglichst hohen Nachweisempfindlichkeit separat optimiert werden.

Durch eine geeignete Materialwahl des Fensters kann zudem als weitere optische Eigenschaft eine Bandpasswirkung derart erreicht werden, dass dieses im wesentlichen zwar für die Wellenlängen der Sendelichtstrahlen durchlässig ist, jedoch Störlicht bei anderen Wellenlängen ausfiltert.

Besonders vorteilhaft ist, dass die Sende- /Empfangseinheit einen nach dem Lichtlaufzeitverfahren arbeitenden Distanzsensor bildet. Der Sender emittiert Sendelichtstrahlen in Form von Sendelichtpulsen, deren Laufzeit zu einem zu detektierenden Objekt in einer Auswerteeinheit erfasst wird.

Mittels der durchgeführten Distanzmessung ist eine Positionsbestimmung von Objekten im Überwachungsbereich möglich, wobei sich die Position eines Objekts aus dem jeweils ermittelten Distanzwert der Distanzmessung und der ak- tuellen Drehposition der Sende- /Empfangseinheit, die mit einem geeigneten Messgeber bestimmt wird, ergibt. Je nach Ausbildung des Fensters kann sich dabei der Überwachungsbereich, innerhalb dessen eine Objektdetektion erfolgt, über einen Winkelbereich von 360° oder nur einen Teilbereich hiervon erstrecken.

Der Aufbau des erfindungsgemäßen optischen Sensors ist derart, dass die Sende- /Empfangseinheit Bestandteil eines rotierenden Messkopfes ist, der innerhalb des ortsfest angeordneten Gehäuses angeordnet ist.

Die im Messkopf integrierte Sende- /Empfangseinheit ist dabei vorteilhaft derart ausgebildet, dass der Sender und/oder eine diesem zugeordnete Sendeoptik axial versetzt zu dem Empfänger und/ oder einer diesem zugeordneten Empfangsoptik ist beziehungsweise sind.

Durch diese versetzte Anordnung wird erreicht, dass nur bei Objekten im Fernbereich die von diesem Objekt rückreflektierten Empfangslichtstrahlen im wesentlichen entlang der optischen Achse der Empfangsoptik auf diese auftreffen, so dass hier der Wirkungsgrad der Empfangsoptik dahingehend optimal ist, dass die Empfangslichtstrahlen von der Empfangsoptik vollständig eingefangen werden. Dagegen wird bei einer Detektion eines Objekts im Nahbereich eine gewollte Dejustierung der Empfangsoptik derart erhalten, dass die Auftreffrichtung der Empfangslichtstrahlen nicht mit der optischen Achse zusammenfällt, das heißt die Empfangslichtstrahlen werden dann unvollständig von der Empfangsoptik erfasst. Auf diese Weise kann die Amplitude der Empfangssignale bei der Detektion von Objekten im Nahbereich reduziert und begrenzt werden, wodurch eine ansonsten auftretende Übersteuerung des Empfängers vermieden wird. Damit werden keine teueren Elektronikkomponenten benötigt, wie zum Beispiel logarithmische Verstärker, um die Empfangssignale auf elektronischem Weg zu begrenzen.

Durch die versetzte Anordnung von Sende- und Empfangsoptik kann bei dem erfindungsgemäßen optischen Sensor somit die Dynamik der Empfangssignale, das heißt der Variationsbereich der Empfangsamplituden innerhalb des gesamten abzudeckenden Distanzbereichs und des Bereichs der Reflektivitäten der zu detektierenden Objekte, auf einfache Weise begrenzt werden. Damit kann nicht nur ein Empfänger mit vereinfachtem Aufbau eingesetzt werden, auch die Anforderungen an die Elektronik zur Auswertung der Empfangssignale werden dadurch verringert, wodurch eine weitere Kostenreduzierung erhalten wird.

Die Objektdetektion von Objekten im Nahbereich kann besonders vorteilhaft dadurch noch verbessert werden, dass die Sendelichtstrahlen in einen Hauptstrahl und in vom Hauptstrahl ausgekoppelten, in unterschiedlichen Winkeln zu diesem verlaufenden Satellitenstrahlen unterteilt sind. Während mit dem Hauptstrahl Objekte im Fernbereich besonders gut detektiert werden können, werden mit den Sendelichtstrahlen insbesondere Objekte im Nahbereich erfasst, wobei hierzu deren Neigungswinkel zum Hauptstrahl geeignet gewählt werden. Der Hauptstrahl und die Satellitenstrahlen werden dabei durch dasselbe Fenster oder durch separate Fenster geführt. Diese Ausführungsform eignet sich besonders gut für eine Sende- /Empfangseinheit, die einen nach dem Impulslaufzeitverfahren arbeitenden Distanzsensor bildet. Die Sendelichtstrahlen werden dann als Sendelichtimpulse emittiert. Die Auswerteeinheit ist derart ausgebildet, dass diese mehrere von einem Sendelichtimpuls stammende Empfangslichtimpulse, die entsprechend der Aufteilung der Sendelichtstrahlen in einen Hauptstrahl und mehrere Satellitenstrahlen von Objekten in unterschiedlichen Distanzen zurückreflektiert und zu verschiedenen Zeitpunkten auf den Empfänger auftreffen, einzeln und Zeit aufgelöst erfasst werden können.

In einer konstruktiv besonders einfachen und effizienten Ausführungsform können die Sendeoptik und/oder die Empfangsoptik in Form einer rotierenden Optik ausgebildet sein beziehungsweise werden.

In einer besonders kompakten und kostengünstigen Ausführungsform können die Sendeoptik und die Empfangsoptik von einem Optikteil gebildet sein.

Der erfindungsgemäße optische Sensor wird bevorzugt im Bereich der Sicherheitstechnik, insbesondere im Bereich des Personenschutzes, eingesetzt. Zur Erfüllung der dort bestehenden Sicherheitsanforderungen weist der optische Sensor eine redundante Signalauswertung, insbesondere in Form einer zweikanaligen Auswerteeinheit, auf.

Um für die mit der Sende- /Empfangseinheit durchgeführten Distanzmessungen das erforderliche Sicherheitsniveau zu erreichen, ist vorteilhaft am Fenster ein Referenzobjekt angeordnet, welches ein Ziel für Referenzmessungen zur Funktionsprüfung der Sende- /Empfangseinheit ist.

Anhand der durchgeführten Referenzmessungen, die bevorzugt von wenigstens einer Amplitudenmessung und einer Distanzmessung gebildet sind, kann geprüft werden, ob die Sende- /Empfangseinheit fehlerfrei arbeitet oder nicht.

Gemäß einer vorteilhaften Ausführungsform ist das Referenzobjekt ein teiltransparentes Objekt. Zur Durchführung der Referenzmessungen wird ein Teil der vom Sender emittierten Sendelichtstrahlen auf den Empfänger der Sende-/Empfangseinheit zurückreflektiert.

In diesem Fall wird mit der Sende- /Empfangseinheit selbst alleine deren fehlerfreie Funktion geprüft.

Alternativ ist zur Durchführung der Referenzmessungen ein zusätzliches Sendeelement, dessen Lichtstrahlen vom Referenzobjekt auf den Empfänger gefiihrt sind, vorgesehen, wobei das Sendeelement Bestandteil des Messkopfes ist. In diesem Fall bildet das Sendeelement ein zusätzliches optisches Element zur Überprüfung des Empfängers.

Ebenso ist es möglich, zur Durchführung der Referenzmessungen ein zusätzliches Empfangselement vorzusehen, auf welches die vom Sender emittierten und vom Referenzobjekt zurückreflektierten Sendelichtstrahlen geführt sind. Das Sendeelement ist Bestandteil des Messkopfes. In diesem Fall bildet das Empfangselement ein zusätzliches optisches Element zur Überprüfung des Senders.

Vorteilhaft werden mit den zusätzlichen optischen Elementen Referenzmessungen in Form von Amplitudenmessungen vorgenommen, während mit dem Sender und Empfänger der Sende- /Empfangseinheit Referenzmessungen in Form von Distanzmessungen durchgeführt werden.

Das Referenzobjekt, das beispielsweise in Form einer Gitterstruktur ausgebildet sein kann, ist an der Innenseite des Gehäuses so angeordnet, dass einmal pro Umdrehung des Messkopfes die Referenzmessungen durchgeführt werden. Dabei ist das Referenzobjekt vorteilhaft teilweise transparent, so dass nur ein Teil der vom Sender emittierten Sendelichtstrahlen vom Referenzobjekt zur Durchführung der Referenzmessungen zurückreflektiert wird, während der größere Teil der Sendelichtstrahlen durch das Gehäuse in den Überwachungsbereich geführt wird und so zur Durchführung von Objektdetektionen genutzt werden kann.

Besonders vorteilhaft ist im Messkopf ein Sensorelement zur Fensterüberwachung integriert. Dabei sind bevorzugt, die vom Sensorelement emittierten Lichtstrahlen durch das Fenster auf einen am Gehäuse befestigten Reflektor und von dort durch das Fenster zurück zum Sensorelement geführt. Mit der Fensterüberwachung wird eine weitere sicherheitsrelevante Überwachungsfunktion erfüllt, da ein verschmutztes Fenster die Nachweissicherheit des optischen Sensors beeinträchtigen kann.

Ein wesentlicher Vorteil dieser Fensterüberwachung besteht darin, dass das hierzu verwendete Sensorelement mit der Sende- /Empfangseinheit, die die Objektdetektion durchführt, mitrotiert und so im Laufe einer Umdrehung des Messkopfes das Fenster über seinen kompletten Umfang testet, ohne dass über diesen gesamten Umfang verteilt eine Sensorik hierfür vorgesehenen werden muss.

In einer vorteilhaften Ausgestaltung der Erfindung sind Elektronikkomponenten zur Steuerung und/oder Auswertung von Signalen der Sende- /Empfangseinheiten im Messkopf integriert. Insbesondere erfolgt mit dem im Messkopf integrierten Elektronikkomponenten eine Signalvorverarbeitung zur Unterdrückung von Fehlsignalen, welche durch Verschmutzungen des Fensters verursacht sind.

Durch die so ausgeführte Signalvorverarbeitung im Messkopf wird eine erhebliche Datenreduktion erreicht, so dass nur noch eine überschaubare Datenmenge an die stationär angeordnete Auswerteeinheit, in welcher die endgültige Auswertung erfolgt, übertragen werden muss.

Besonders vorteilhaft erfolgt zwischen dem rotierenden Messkopf und einem ortfesten Teil des optischen Sensors eine sichere oder nicht sichere, berührungslose Energie- und/oder Datenübertragung.

Damit wird mit verschleißfrei arbeitenden Komponenten eine Übertragung zwischen stationären und rotierenden Komponenten des optischen Sensors ermöglicht.

Eine zweckmäßige Ausgestaltung der Erfindung sieht vor, dass der optische Sensor Mittel zur Visualisierung der Sendelichtstrahlen aufweist.

Hiermit kann beispielsweise visualisiert werden, wie die Sendelichtstrahlen im Überwachungsbereich verlaufen und/oder an welcher Stelle die Sendelichtstrahlen auf einem Objekt auftreffen. Der entsprechende Bereich kann dadurch angezeigt werden, dass dann ein sichtbarer Lichtstrahl durch ein im Messkopf mitrotierendes Lichtsendeelement aktiviert wird. Alternativ kann ein sichtbarer

Lichtfleck am Fenster oder einem in diesem Bereich angeordneten Reflektorring abgebildet werden.

Der erfindungsgemäße optische Sensor kann generell dahingehend erweitert sein, dass die Sende- /Empfangseinheit mehrere Paare von Sendern und Empfängern aufweist. Mit den Sende- / Empfangslichtstrahlen der einzelnen Paare, die durch ein oder mehrere Fenster im Gehäuse geführt sind, kann simultan an mehreren Orten eine Objektdetektion erfolgen, das heißt der mit dem optischen Sensor erfassbare Überwachungsbereich wird dadurch vergrößert.

Die Erfindung wird im Folgenden anhand der Zeichnungen erläutert. Es zeigen:
Figur 1 : Schematische Darstellung eines Ausführungsbeispiels des erfindungsgemäßen optischen Sensors.
Figur 2: Darstellung von Komponenten der Sende- /Empfangseinheit des optischen Sensors gemäß Figur 1 bei Detektion eines Objekts im Fernbereich.
Figur 3: Anordnung gemäß Figur 2 bei einer Detektion eines Objekts im Nachbereich.

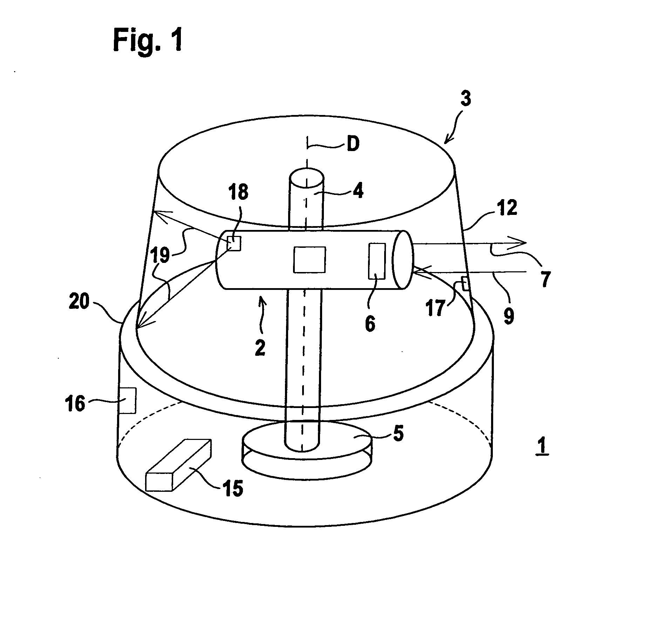

Figur 1 zeigt schematisch den Aufbau eines optischen Sensors 1 für eine Objektdetektion in einem Überwachungsbereich. Der optische Sensor 1 weist einen um eine Drehachse D drehbaren Messkopf 2 auf, der in einem ortsfesten, das heißt nicht mitdrehende Gehäuse 3 angeordnet ist. Der Messkopf 2 ist auf einer entlang der Drehachse D verlaufenden Welle 4 gelagert, die mittels eines Antriebs 5 in eine Drehbewegung versetzt wird. Während der mit dem Messkopf 2 durchgeführten Objektdetektion dreht sich dieser mit einer konstanten Drehzahl. Die aktuelle Drehposition des Messkopfes 2 wird mit einem Messgeber, insbesondere einem Winkelgeber, erfasst.

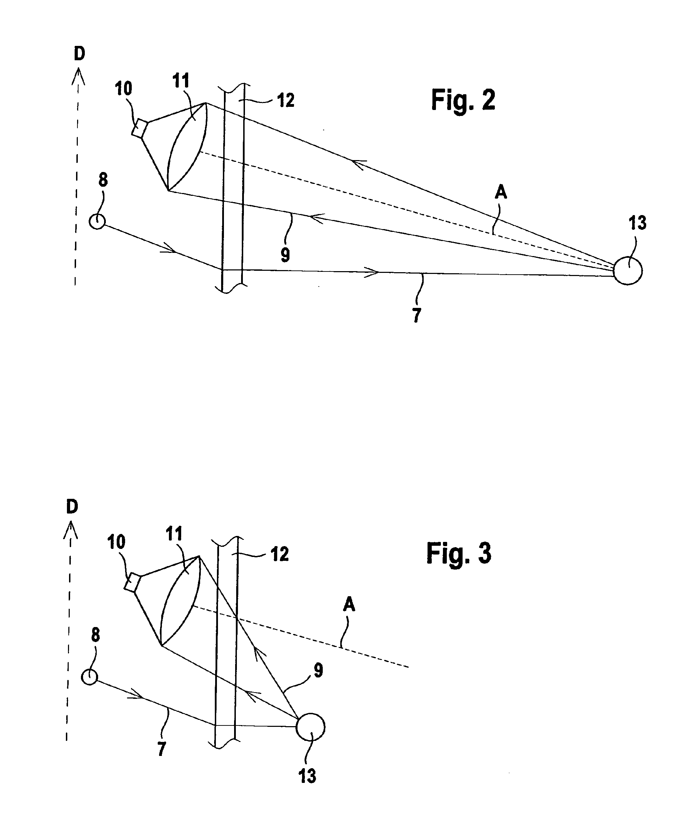

In dem Messkopf 2 ist eine Sende- /Empfangseinheit 6 integriert, welche ein optisches Distanzsensorelement bildet. Die einzelnen Komponenten der Sende-/Empfangseinheit 6 sind in den Figuren 2 und 3 dargestellt.

Die Sender- /Empfangseinheit 6 umfasst einen Sendelichtstrahlen 7 emittierenden Sender 8 in Form einer Laserdiode. Der Laserdiode kann unmittelbar eine nicht gesondert dargestellte Sendeoptik in Strahlrichtung der Sendelichtstrahlen 7 nachgeordnet sein. Die Sende- /Empfangseinheit 6 umfasst weiter einen Empfangslichtstrahlen 9 empfangenden Empfänger 10 in Form einer Photodiode oder dergleichen. Dem Empfänger 10 ist eine Empfangsoptik 11 in Form einer Linse vorgeordnet. Generell kann die Empfangsoptik auch als reflektierende Optik ausgebildet sein.

Wie aus den Figuren 1 bis 3 ersichtlich, werden die Sendelichtstrahlen 7 und Empfangslichtstrahlen 9 durch einen Abschnitt des Gehäuses 3 geführt, welcher ein Fenster 12 bildet. Das Fenster 12 erstreckt sich in Umfangsrichtung des Gehäuses 3 um den vollen Winkelbereich von 360°. Durch die Drehbewegung des Messkopfes 2 werden die Sendelichtstrahlen 7 periodisch über den gesamten Winkelbereich von 360° geführt, so dass dieser Bereich auch den Überwachungsbereich bildet, innerhalb dessen eine Objektdetektion erfolgt. Durch die Distanzmessung und die gleichzeitige Erfassung der aktuellen Drehposition des Messkopfes 2 können bei der Objektdetektion die genauen Objektpositionen ermittelt werden.

Die mit der Sende- /Empfangseinheit 6 durchgeführten Distanzmessungen erfolgen nach einem Lichtlaufzeitverfahren. Hierzu emittiert der Sender 8 Sendelichtstrahlen 7 in Form von Sendelichtpulsen. Zur Distanzbestimmung werden die Lichtlaufzeiten gemessen, die jeweils ein Sendelichtpuls zu einem zu detektierenden Objekt 13 und zurück zum Empfänger 8 benötigt. Die entsprechenden Strahlengänge zeigen die Figuren 2 und 3. Die vom Sender 8 emittierten Sendelichtstrahlen 7 durchsetzten das Fenster 12 und verlaufen dann im Überwachungsbereich. Dort werden die Sendelichtstrahlen 7 von einem Objekt 13 reflektiert und werden als Empfangslichtstrahlen 9 durch das Fenster 12 zurück auf den Empfänger 10 geführt.

Wie aus den Figuren 2 und 3 ersichtlich, sind der Sender 8 und der Empfänger 10 der Sende- /Empfangseinheit 6 in axialer Richtung, das heißt in Richtung der Drehachse D des Messkopfes 2, versetzt zueinander angeordnet. Dabei ist die Empfangsoptik mit ihrer optischen Achse A etwas nach unten geneigt angeordnet.

Der Sender 8 ist so im Gehäuse 3 angeordnet, dass die Sendelichtstrahlen 7 auch etwas nach unten geneigt angeordnet sind, so dass keine unerwünschte Rückreflektionen der Sendelichtstrahlen 7 innerhalb des Gehäuses 3 in den Empfänger 10 auftreten. Das Fester 12 des Gehäuses 3 weist die Funktion eines strahlformenden Elements für die Sendelichtstrahlen 7 derart auf, dass die Sendelichtstrahlen 7, insbesondere durch eine geeignete Formgebung des Fensters 12 in diesem Bereich, so abgelenkt werden, dass diese im Überwachungsbereich senkrecht zur Drehachse verlaufen.

Generell werden unerwünschte Reflexionen der Sende- und Empfangslichtstrahlen bereits auch dadurch verhindert, dass der Messkopf einen Tubus zur Führung der Sende- und Empfangslichtstrahlen oder zwei Tuben zur getrennten Führung der Sende- und Empfangslichtstrahlen ausbildet oder aufweist. Dieser Tubus oder diese Tuben können bis dicht vor das Fenster herangeführt sein, wodurch die unerwünschten Reflexionen vermeiden werden.

Figur 2 zeigt die Detektion eines Objektes 13 im Fernbereich. Dort liegt das Objekt etwa im Bereich der optischen Achse A der Empfangsoptik, so dass die vom Objekt 13 zurückreflektierten Empfangslichtstrahlen 9 vollständig über die Empfangsoptik 11 zum Empfänger 10 geführt sind. Dadurch wird auch bei großen Objektdistanzen eine große Lichtmenge an Empfangslicht auf den Empfänger 10 geführt, so dass am Ausgang des Empfängers 10 ein hinreichend großes Empfangssignal für eine sichere Objektdetektion erhalten wird.

Figur 3 zeigt die Detektion eines Objekts 13 im Nahbereich. Aufgrund der geringen Distanz des Objekts 13 zum Messkopf 2 besteht die Gefahr einer Übersteuerung des Empfängers 10. Dies wird durch die versetzte Anordnung von Sender 8 und Empfänger 10 jedoch vermieden. Wie aus Figur 3 ersichtlich, liegt für ein Objekt 13 im Nahbereich eine gewollte Dejustierung des Empfängers 10 derart vor, dass das Objekt 13 außerhalb der optischen Achse des Empfängers 10 liegt. Dadurch gelangt nur noch ein Teil des Empfangslichts auf den Empfänger 10, so dass dieser nicht übersteuert wird.

Zur Auswertung der in der Sende- /Empfangseinheit 6 generierten Signale ist im Messkopf 2 mitrotierend eine Vorverarbeitungseinheit 14 und ortsfest im Gehäuse 3 eine Auswerteinheit 15 angeordnet. Zur Erfüllung der Anforderungen für den Einsatz im Bereich des Personenschutzes sind diese zweikanalig ausgebildet, insbesondere in Form sich gegenseitig zyklisch überwachender Rechnereinheiten.

Zwischen den stationär angeordneten Komponenten des optischen Sensors 1 einerseits und den mit dem Messkopf 2 mitrotierenden Komponenten des optischen Sensors 1 anderseits erfolgt eine berührungslose Daten- und Energieübertragung, die für den Einsatz im Bereich der Sicherheitstechnik fehlersicher ausgebildet ist. Die berührungslose Datenübertragung kann auf optischem Weg oder mittels einer Funkverbindung erfolgen. Die Datenübertragung kann insbesondere über die als Hohlwelle ausgebildete Welle 4 erfolgen. Die berührungslose Energieübertragung kann durch elektrische Felder oder induktiv erfolgen. Die Energieübertragung kann dabei nach dem Transformationsprinzip erfolgen, deren Wirkungsgrad mittels eines ferromagnetischen Kerns erhöht werden kann.

In der Vorverarbeitungseinheit 14 erfolgt eine Signalvorverarbeitung derart, dass Störsignale, die durch Staub oder dergleichen von Nutzsignalen, die von einem Objekt 13 stammen, separiert und eliminiert werden. Dabei wird der Umstand ausgenutzt, dass in der Luft vorhandene Staubpartikel nur von einzelnen Sendelichtpulsen detektiert werden. Demgegenüber weist ein zu detektierendes Objekt 13 eine sehr viel größere Abmessung auf. Beispielsweise im Bereich der Sicherheitstechnik ist die minimale zu messende Objektgröße durch das Bein einer Person definiert. Bei der Detektion eines solchen Objekts 13 treffen in einem ausgedehnten Drehwinkelbereich mehrere Sendelichtpulse auf das Objekt 13. So kann in der Vorverarbeitungseinheit 14 aus der Anzahl der bei einer Objektdetektion vorliegenden Sendelichtpulsen sicher zwischen Nutz- und Störsignalen unterschieden werden.

Von der Vorverarbeitungseinheit 14 werden nur die Nutzsignale an die Auswerteinheit 15 übertragen. In der Auswerteeinheit 15 wird daraus ein Schaltsignal generiert und über einen Schaltausgang 16 ausgegeben. Bei einem Einsatz im Bereich der Sicherheitstechnik wird mit dem optischen Sensor 1 ein Gefahrenbereich an einer Anlage überwacht. Wird mit dem optischen Sensor 1 kein Objekt 13 erkant und wird eine fehlerfreie Funktion des optischen Sensors 1 durch die interne Geräteprüfung festgestellt, so wird über den Schaltausgang 16 ein Freigabesignal ausgegeben, das die Anlage in Betrieb setzt. Wird dagegen im optischen Sensor 1 eine interne Fehlfunktion festgestellt, oder es wird ein Objekt 13 im Überwachungsbereich detektiert, so wird über den Schaltausgang ein Abschaltbefehl ausgegeben, durch welchen die Anlage stillgesetzt wird.

Zur Funktionsprüfung der Sende- /Empfangseinheit 6 ist lokal an einer Stelle der Innenseite des Fensters 12 ein Referenzobjekt 17 angeordnet, das im vorliegendem Fall von einem teiltransparenten Gitter gebildet ist. Pro Umdrehung des Messkopfes 2 treffen die Sendelichtstrahlen 7 des Senders 8 auf dieses Referenzobjekt 17, wodurch eine Referenzmessung zur Prüfung der Funktion der Sende- /Empfangseinheit 6 durchgeführt wird. Für die Referenzmessung werden im vorliegenden Fall der Sender 8 und der Empfänger 10 der Sende-/Empfangseinheit 6 selbst verwendet. Treffen die Sendelichtstrahlen 7 auf das Referenzobjekt 17, so wird ein Teil der Sendelichtstrahlen 7 vom Referenzobjekt 17 auf den Empfänger 10 geführt. Der größte Teil der Sendelichtstrahlen 7 durchdringt das Referenzobjekt 17 und/oder wird an diesem vorbeigeführt und steht damit für eine Objektdetektion zur Verfügung. Anhand der Laufzeitunterschiede der Sendelichtpulse kann in der Vorverarbeitungseinheit 14 unterschieden werden, ob ein Empfangslichtpuls von dem Referenzobjekt 17 oder von einem Objekt 13 im Überwachungsbereich stammt. Die Referenzmessung unterteilt sich in eine Amplitudenmessung und eine Distanzmessung, wobei die jeweiligen Messergebnisse mit vorgegebenen Sollwerten verglichen werden. Nur bei einer Übereinstimmung der Messergebnisse mit den Sollwerten liegt eine fehlerfreie Funktion der Sende- /Empfangseinheit 6 vor.

Im Messkopf 2 ist weiterhin ein Sensorelement 18 integriert, dass für eine Fensterscheibenüberwachung eingesetzt wird. Das Sensorelement 18 umfasst ein Lichtstrahlen 19 emittierendes Sendeelement und ein Lichtstrahlen 19 empfangendes Empfangselement, welche in Figur 1 nicht separat dargestellt sind.

Das gegenüberliegend zur Sende- /Empfangseinheit 6 im Messkopf 2 angeordnete Sensorelement 18 emittiert Lichtstrahlen 19 so, dass diese das Fenster 12 durchsetzten und dann auf einen Reflektor in Form einer Reflektorleiste 20, die in Umfangsrichtung an der Außenseite des Gehäuses 3 umläuft, auftreffen. Die von dort rückreflektierten Lichtstrahlen 19 durchsetzen nochmals das Fenster 12 und treffen dann auf das Empfangselement des Sensorelements 18. In der Auswerteeinheit 15 werden dann anhand von verstärkten Abschwächungen der Lichtstrahlen 19 lokale Verschmutzungen des Fensters 12 detektiert.

### Bezugszeichenliste

- (1): Optischer Sensor
- (2): Messkopf
- (3): Gehäuse
- (4): Welle
- (5): Antrieb
- (6): Sende- /Empfangseinheit
- (7): Sendelichtstrahlen
- (8): Sender
- (9): Empfangslichtstrahlen
- (10): Empfänger
- (11): Empfangsoptik
- (12): Fenster
- (13): Objekt
- (14): Vorverarbeitungseinheit
- (15): Auswerteeinheit
- (16): Schaltausgang
- (17): Referenzobjekt
- (18): Sensorelement
- (19): Lichtstrahlen
- (20): Reflektorleiste
- (D): Drehachse

## Patentansprüche

1. Optischer Sensor (1) zur Erfassung von Objekten innerhalb eines Überwachungsbereichs, mit einer innerhalb eines Gehäuses (3) angeordneten, um eine Drehachse (D) drehbaren Sende- /Empfangseinheit (6), umfassend einen Sendelichtstrahlen (7) emittierenden Sender (8) und einen Empfangslichtstrahlen (9) empfangenden Empfänger (10), wobei durch die Drehbewegung der Sende-/Empfangseinheit (6) die Sendelichtstrahlen (7) periodisch innerhalb des Überwachungsbereichs geführt sind, und wobei die Sendelichtstrahlen (7) und die Empfangslichtstrahlen (9) durch ein Fenster (12) des Gehäuses (3) geführt sind, wobei das Fenster (12) ein optisches Mittel zur Strahlformung der Sendelichtstrahlen (7) und Empfangslichtstrahlen (9) bildet, und wobei der optische Sensor (1) eine redundante Signalauswertung aufweist.

2. Optischer Sensor nach Anspruch 1, **dadurch gekennzeichnet, dass** die Sende- /Empfangseinheit (6) einen nach dem Lichtlaufzeitverfahren arbeitenden Distanzsensor bildet, wobei der Sender (8) Sendelichtstrahlen (7) in Form von Sendelichtpulsen emittiert, deren Laufzeit zu einem zu detektierenden Objekt (13) erfasst wird.

3. Optischer Sensor nach einem der Ansprüche 1 oder 2, **dadurch gekennzeichnet, dass** der Sender (8) und/oder eine diesem zugeordnete Sendeoptik axial versetzt zu dem Empfänger (10) und/oder einer diesem zugeordneten Empfangsoptik (11) ist beziehungsweise sind.

4. Optischer Sensor nach Anspruch 3, **dadurch gekennzeichnet, dass** die Sendeoptik und/oder die Empfangsoptik (11) in Form einer reflektierenden Optik ausgebildet ist beziehungsweise sind.

5. Optischer Sensor nach einem der Ansprüche 3 oder 4, **dadurch gekennzeichnet, dass** die Sendeoptik und die Empfangsoptik (11) von einem Optikteil gebildet sind.

6. Optik Sensor nach einem der Ansprüche 1 bis 5, **dadurch gekennzeichnet, dass** sich der Überwachungsbereich über einen Winkelbereich von 360° oder einen Teilbereich hiervon erstreckt.

7. Optischer Sensor nach einem der Ansprüche 1 bis 6, **dadurch gekennzeichnet, dass** die Sende- /Empfangseinheit (6) Bestandteil eines rotierenden Messkopfes (2) ist, der innerhalb des ortsfest angeordneten Gehäuses (3) angeordnet ist.

8. Optischer Sensor nach einem der Ansprüche 1 bis 7, **dadurch gekennzeichnet, dass** am Fenster (12) ein Referenzobjekt (17) angeordnet ist, welches ein Ziel für Referenzmessungen zur Funktionsprüfung der Sende- /Empfangseinheit (6) ist.

9. Optischer Sensor nach Anspruch 8, **dadurch gekennzeichnet, dass** das Referenzobjekt ein teiltransparentes Objekt (13) ist, wobei zur Durchführung der Referenzmessungen ein Teil der vom Sender (8) emittierten Sendelichtstrahlen (7) auf den Empfänger (10) der Sende-/Empfangseinheit (6) zurückreflektiert wird.

10. Optischer Sensor nach einem der Ansprüche 8 oder 9, **dadurch gekennzeichnet, dass** zur Durchführung der Referenzmessungen ein zusätzliches Sendeelement, dessen Lichtstrahlen vom Referenzobjekt auf den Empfänger (10) geführt sind, vorgesehen ist, wobei das Sendeelement Bestandteil des Messkopfes (2) ist, und/oder dass zur Durchführung der Referenzmessungen ein zusätzliches Empfangselement vorgesehen ist, auf welches die vom Sender (8) emittierten und vom Referenzobjekt zurückreflektierten Sendelichtstrahlen (7) geführt sind, wobei das Empfangselement Bestandteil des Messkopfes (2) ist.

11. Optischer Sensor nach einem der Ansprüche 8 bis 10, **dadurch gekennzeichnet, dass** die Referenzmessungen eine Amplituden- und eine Distanzmessung umfassen.

12. Optischer Sensor nach einem der Ansprüche 7 bis 11, **dadurch gekennzeichnet, dass** im Messkopf (2) ein Sensorelement (18) zur Fensterüberwachung integriert ist, wobei vom Sensorelement (18) emittierte Lichtstrahlen durch das Fenster (12) auf einen am Gehäuse (3) befestigten Reflektor und von dort durch das Fenster (12) zurück zum Sensorelement (18) geführt sind.

13. Optischer Sensor nach einem der Ansprüche 7 bis 12, **dadurch gekennzeichnet, dass** Elektronikkomponenten zur Steuerung und/oder Auswertung von Signalen der Sende- /Empfangseinheiten (6) im Messkopf (2) integriert sind.

14. Optischer Sensor nach Anspruch 13, **dadurch gekennzeichnet, dass** mit den im Messkopf (2) integrierten Elektronikkomponenten eine Signalvorverarbeitung zur Unterdrückung von Fehlsignalen erfolgt.

15. Optischer Sensor nach einem der Ansprüche 7 bis 14, **dadurch gekennzeichnet, dass** zwischen dem rotierendem Messkopf (2) und einem ortfesten Teil des optischen Sensors (1) eine sichere oder nicht sichere, berührungslose Energie- und/oder Datenübertragung erfolgt.

16. Optischer Sensor nach einem der Ansprüche 1 bis 15, **dadurch gekennzeichnet, dass** dieser Mittel zur Visualisierung der Sendelichtstrahlen (7) oder des Auftreffpunkts der Sendelichtstrahlen (7) auf einem Objekt aufweist.

17. Optischer Sensor nach einem der Ansprüche 1 bis 16, **dadurch gekennzeichnet, dass** die Sendelichtstrahlen (7) in einen Hauptstrahl und in vom Hauptstrahl ausgekoppelten, in unterschiedlichen Winkeln zu diesem verlaufenden Satellitenstrahlen unterteilt sind.

18. Optischer Sensor nach Anspruch 1, **dadurch gekennzeichnet, dass** die Sende- /Empfangseinheit mehrere Paare von Sendern (8) und Empfängern (10) aufweist.

## Claims

1. Optical sensor (1) for the detection of objects within a monitoring region, with a transmitting/receiving unit (6), which is arranged within a housing (3) and is rotatable about an axis (D) of rotation and which comprises a transmitter (8) emitting transmitted light beams (7) and a receiver (10) receiving received light beams (9), wherein the transmitted light beams (7) are periodically guided within the monitoring region by the rotational movement of the transmitting/receiving unit (6) and wherein the transmitted light beams (7) and the received light beams (9) are guided through a window (12) of the housing (3), wherein the window (12) forms an optical means for beam formation of the transmitted light beams (7) and received light beams (9) and wherein the optical sensor (1) comprises redundant signal evaluation means.

2. Optical sensor according to claim 1, **characterised in that** the transmitting/receiving unit (6) forms a distance sensor operating in accordance with the light transit time method, wherein the transmitter (8) emits transmitted light beams (7) in the form of transmitted light pulses, the transit time of which to an object (13) to be detected is detected.

3. Optical sensor according to one of claims 1 and 2, **characterised in that** the transmitter (8) and/or a transmission optical system associated therewith is or are offset with respect to the receiver (10) and/or with respect to a receiving optical system (11) associated therewith.

4. Optical sensor according to claim 3, **characterised in that** the transmission optical system and/or the receiving optical system (11) is or are constructed in the form of a reflecting optical system.

5. Optical sensor according to one of claims 3 and 4, **characterised in that** the transmission optical system and the receiving optical system (11) are formed by an optical component.

6. Optical sensor according to any one of claims 1 to 5, **characterised in that** the monitoring region extends over an angular range of 360° or a sub-region thereof.

7. Optical sensor according to any one of claims 1 to 6, **characterised in that** the transmitting/receiving unit (6) is a component of a rotating measuring head (2) arranged within the housing (3), which is arranged in stationary position.

8. Optical sensor according to any one of claims 1 to 7, **characterised in that** a reference object (17), which is a target for reference measurements for functional checking of the transmitting/receiving unit (6), is arranged at the window (12).

9. Optical sensor according to claim 8, **characterised in that** the reference object is a partly transparent object (13), wherein for performance of the reference measurements a part of the transmitted light beams (7) emitted by the transmitter (8) is reflected back onto the receiver (10) of the transmitting/receiving unit (6).

10. Optical sensor according to one of claims 8 and 9, **characterised in that** for performance of the reference measurements and additional transmitting element, the light beams of which are guided from the reference object to the receiver (10), is provided, wherein the transmitting element is a constituent of the measuring head (2), and/or that for performance of the reference measurements an additional receiving element is provided, onto which the transmitted light beams (7) emitted by the transmitter (8) and reflected back from the reference object, are guided, wherein the receiving element is a constituent of the measuring head (2).

11. Optical sensor according to any one of claims 8 to 10, **characterised in that** the reference measurements comprise an amplitude measurement and a distance measurement.

12. Optical sensor according to any one of claims 7 to 11, **characterised in that** a sensor element (18) for window monitoring is integrated in the measuring head (2), wherein light beams emitted by the sensor element (18) are guided through the window (12) to a reflector fastened to the housing (3) and from there through the window (12) back to the sensor element (18).

13. Optical sensor according to any one of claims 7 to 12, **characterised in that** electronic components for control and/or evaluation of signals of the transmitting/receiving units (6) are integrated in the measuring head (2).

14. Optical sensor according to claim 13, **characterised in that** preliminary signal processing for suppression of erroneous signals is carried out by the electronic components integrated in the measuring head (2).

15. Optical sensor according to any one of claims 7 to 14, **characterised in that** a secure or non-secure contactless energy and/or data transmission takes place between the rotating measuring head (2) and a stationary part of the optical sensor (1).

16. Optical sensor according to any one of claims 1 to 15, **characterised in that** this comprises means for visualisation of the transmitted light beams (7) and/or the point of incidence of the transmitted light beams (7) on an object.

17. Optical sensor according to any one of claims 1 to 16, **characterised in that** the transmitted light beams (7) are divided into a main beam and into satellite beams decoupled from the main beam and running at different angles with respect thereto.

18. Optical sensor according to claim 1, **characterised in that** the transmitting/receiving unit comprises a plurality of pairs of transmitters (8) and receivers (10).

## Revendications

1. Capteur optique (1) pour la détection d'objets à l'intérieur d'une zone de surveillance, avec une unité d'émission/réception (6) disposée à l'intérieur d'un boîtier (3) et pouvant tourner autour d'un axe de rotation (D), comprenant un émetteur (8) émettant des rayons lumineux d'émission (7) et un récepteur (10) recevant des rayons lumineux de réception (9), les rayons lumineux d'émission (7) étant guidés périodiquement à l'intérieur de la zone de surveillance par le mouvement de rotation de l'unité d'émission/réception (6), et les rayons lumineux d'émission (7) et les rayons lumineux de réception (9) étant guidés à travers une fenêtre (12) du boîtier (3), laquelle fenêtre (12) forme un moyen optique de mise en forme du faisceau des rayons lumineux d'émission (7) et des rayons lumineux de réception (9), et le capteur optique (1) présentant une évaluation redondante des signaux.

2. Capteur optique selon la revendication 1, **caractérisé en ce que** l'unité d'émission/réception (6) forme un capteur de distance fonctionnant selon le principe du temps de parcours de la lumière, l'émetteur (8) émettant des rayons lumineux d'émission (7) sous la forme d'impulsions lumineuses d'émission dont le temps de parcours vers un objet à détecter (13) est mesuré.

3. Capteur optique selon l'une des revendications 1 ou 2, **caractérisé en ce que** l'émetteur (8) et/ou une optique d'émission associée à celui-ci est/sont décalé(s) axialement par rapport au récepteur (10) et/ou à une optique de réception (11) associée à celui-ci.

4. Capteur optique selon la revendication 3, **caractérisé en ce que** l'optique d'émission et/ou l'optique de réception (11) est/sont réalisée(s) sous la forme d'une optique réfléchissante.

5. Capteur optique selon l'une des revendications 3 ou 4, **caractérisé en ce que** l'optique d'émission et l'optique de réception (11) sont formées par une pièce optique.

6. Capteur optique selon l'une des revendications 1 à 5, **caractérisé en ce que** la zone de surveillance s'étend sur une plage angulaire de 360° ou sur une partie de celle-ci.

7. Capteur optique selon l'une des revendications 1 à 6, **caractérisé en ce que** l'unité d'émission/réception (6) fait partie d'une tête de mesure rotative (2) qui est disposée à l'intérieur du boîtier (3) disposé en position fixe.

8. Capteur optique selon l'une des revendications 1 à 7, **caractérisé en ce qu'**un objet de référence (17), qui est une cible pour des mesures de référence pour le contrôle de fonctionnement de l'unité d'émission/réception (6), est disposé sur la fenêtre (12).

9. Capteur optique selon la revendication 8, **caractérisé en ce que** l'objet de référence est un objet semi-transparent (13) et que pour effectuer les mesures de référence, une partie des rayons lumineux d'émission (7) émis par l'émetteur (8) est renvoyée sur le récepteur (10) de l'unité d'émission/réception (6).

10. Capteur optique selon l'une des revendications 8 ou 9, **caractérisé en ce que** pour effectuer les mesures de référence, un élément d'émission supplémentaire, dont les rayons lumineux sont guidés par l'objet de référence sur le récepteur (10), est prévu, l'élément d'émission faisant partie de la tête de mesure (2), et/ou que pour effectuer les mesures de référence, un élément de réception supplémentaire est prévu, sur lequel sont guidés les rayons lumineux d'émission (7) émis par l'émetteur (8) et renvoyés par l'objet de référence, l'élément de réception faisant partie de la tête de mesure (2).

11. Capteur optique selon l'une des revendications 8 à 10, **caractérisé en ce que** les mesures de référence comprennent une mesure d'amplitude et une mesure de distance.

12. Capteur optique selon l'une des revendications 7 à 11, **caractérisé en ce qu'**un élément capteur (18) pour la surveillance de la fenêtre est intégré dans la tête de mesure (2), des rayons lumineux émis par l'élément capteur (18) étant guidés à travers la fenêtre (12) sur un réflecteur fixé au boîtier (3) et de là renvoyés vers l'élément capteur (18) à travers la fenêtre (12).

13. Capteur optique selon l'une des revendications 7 à 12, **caractérisé en ce que** des composants électroniques pour la commande et/ou l'évaluation de signaux des unités d'émission/réception (6) sont intégrés dans la tête de mesure (2).

14. Capteur optique selon la revendication 13, **caractérisé en ce qu'**un prétraitement de signaux pour supprimer les signaux erronés est effectué avec les composants électroniques intégrés dans la tête de mesure (2).

15. Capteur optique selon l'une des revendications 7 à 14, **caractérisé en ce qu'**une transmission d'énergie et/ou de données sans contact, sécurisée ou non sécurisée, a lieu entre la tête de mesure (2) rotative et une partie fixe du capteur optique (1).

16. Capteur optique selon l'une des revendications 1 à 15, **caractérisé en ce que** celui-ci présente des moyens pour visualiser les rayons lumineux d'émission (7) ou le point d'impact des rayons lumineux d'émission (7) sur un objet.

17. Capteur optique selon l'une des revendications 1 à 16, **caractérisé en ce que** les rayons lumineux d'émission (7) sont divisés en un faisceau principal et en faisceaux satellites découplés du faisceau principal, s'étendant selon différents angles par rapport à celui-ci.

18. Capteur optique selon la revendication 1, **caractérisé en ce que** l'unité d'émission/réception présente plusieurs paires d'émetteurs (8) et de récepteurs (10).
